Europäisches Patentamt

European Patent Office

Office européen des brevets

(11) Numéro de publication : **0 033 689**
**B1**

(12) **FASCICULE DE BREVET EUROPÉEN**

(45) Date de publication du fascicule du brevet :
11.04.84

(51) Int. Cl.³ : **B 23 Q  7/04**, B 65 G 61/00

(21) Numéro de dépôt : **81400124.4**

(22) Date de dépôt : **28.01.81**

(54) **Dispositif de transfert automatique d'objets.**

(30) Priorité : **31.01.80 FR 8002096**

(43) Date de publication de la demande :
**12.08.81 Bulletin 81/32**

(45) Mention de la délivrance du brevet :
**11.04.84 Bulletin 84/15**

(84) Etats contractants désignés :
**AT BE CH DE GB IT LI NL SE**

(56) Documents cités :
**DE-A- 2 015 236**
**DE-A- 2 444 124**
**DE-A- 2 658 288**
**DE-A- 2 710 661**
**FR-A- 1 122 708**
**FR-A- 1 347 833**
**FR-A- 2 153 036**
**US-A- 3 420 008**
**US-A- 3 440 905**
**US-A- 3 762 242**

(73) Titulaire : **WABCO WESTINGHOUSE EQUIPEMENTS FERROVIAIRES S.A.**
**2 boulevard Westinghouse**
**Sevran (Seine-Saint-Denis) (FR)**

(72) Inventeur : **Poulet, Gérard**
**14, rue J.B. Clement**
**F-93190 Livry-Gargan (FR)**
Inventeur : **Quetier, Serge**
**47, rue Léon Jouhaux**
**F-93190 Livry-Gargan (FR)**

(74) Mandataire : **Hirsch, Marc-Roger**
**34 rue de Bassano**
**F-75008 Paris (FR)**

Dispositif de transfert automatique d'objets

La présente invention se rapporte à un dispositif de transfert automatique d'objets ou de pièces rangés en une pile verticale sur un plateau support vers un poste d'opération tel qu'une machine-outil ou respectivement de transfert inverse du poste d'opération vers le plateau support, du type comprenant un bras de transfert porté par un support mobile dans un bâti et muni à son extrémité d'au moins un mécanisme de préhension de l'objet à partir d'une position de départ constante, le support du bras se déplaçant, à partir d'une position de départ constante, dans un plan sensiblement vertical sous l'action, d'une part, de moyens de guidage tels qu'au moins une colonne verticale fixe et, d'autre part, d'au moins un vérin à fluide sous pression dont l'un des éléments (piston ou respectivement cylindre) est relié directement ou par l'intermédiaire d'organes de transmission au support du bras.

La demande de brevet DE-A-2 444 124 révélant les caractéristiques selon le préambule de la revendication 1, décrit un dispositif de transfert automatique vers un poste d'usinage de pièces rangées en piles verticales disposées sur une palette de manutention. En dépit de la hauteur variable de la pile de pièces superposées, le point de saisie en direction verticale est rendu sensiblement fixe, grâce à l'action d'un vérin de levage à vis et le bras de préhension du dispositif de transfert se déplace uniquement en rotation par rapport à la palette de manutention.

Les dispositifs de transfert connus assurent ainsi généralement la saisie d'une pièce brute à un endroit fixe bien déterminé du poste d'approvisionnement constitué, par exemple, par un convoyeur et/ou une goulotte d'amenée de pièce par gravité en face du point de saisie par les mors de la machine-outil.

Le brevet FR-A-1 122 708 décrit un distributeur automatique de pièces à travailler, notamment pour machines-outils, comportant un moyen de préhension tel qu'une pince, destinée à amener la pièce à travailler à sa position de travail. La pince reçoit trois mouvements distincts, à savoir :

a) un mouvement vertical de haut en bas pour prendre la pièce de la table de service ;

b) un mouvement de bas en haut suivi d'un mouvement de rotation pour amener la pièce au-dessus de l'outil ;

c) un mouvement vertical de haut en bas pour positionner la pièce sur l'outil, l'ouverture et la fermeture de la pince ainsi que les divers mouvements étant commandés à partir d'un distributeur pneumatique, ce qui évite les risques d'accident et augmente, du fait de l'automatisme, les cadences de production.

La commande de la pince par une pression d'air comprimé constitue un système de manutention à grande élasticité qui permet en outre de rattraper de petits écarts de positionnement des pièces.

L'un des buts de la présente invention est de permettre la saisie de pièces brutes empilées sur une palette de manutention. Dans une telle disposition, le pont de saisie n'est plus fixe et la palette de manutention ainsi que le bras de préhension doivent se déplacer l'un par rapport à l'autre pour permettre l'accès du mécanisme du préhension à toutes les pièces empilées sur la palette.

A cet effet, le piston du vérin est soumis en position d'arrêt à l'action du fluide d'au moins une chambre de fluide à grande élasticité tel que de l'air comprimé et pour contrôler, depuis la position de départ constante, le mouvement d'approche du mécanisme de préhension vers l'objet à saisir situé à des hauteurs variables sur sa pile, le dispositif comporte, d'une part, des moyens de valve susceptibles de relier au moins l'une des deux chambres de pression du vérin délimitées par le piston à une source de fluide sous pression tel que de l'air comprimé ou respectivement à l'échappement pour provoquer le déplacement relatif du piston du vérin et l'approche du mécanisme de préhension vers l'objet, et, d'autre part, au moins un organe détecteur préréglé porté par le bras de transfert ou le mécanisme de préhension et susceptible de repérer l'approche du haut de la pile d'objets par le mécanisme de préhension et d'agir sur les moyens de valve pour déclencher l'isolement de ladite chambre de la source de fluide ou respectivement de l'échappement pour provoquer par là, l'arrêt « élastique » du piston du vérin par rapport à son cylindre sous l'action résultante de la pression différentielle de fluide agissant sur lui combinée aux autres forces agissant sur le mécanisme de préhension telles que la pesanteur, les réactions de frottement et de contact et, par voie de conséquence, l'arrêt sous l'action résultante d'un volume de fluide élastique tel que de l'air comprimé, du mécanisme de préhension dans une position de manipulation où il reçoit l'ordre de saisir ou respectivement lâcher l'objet sur le haut de la pile d'objets et en ce que pour dégager le bras de transfert de la pile d'objets, après saisie ou respectivement lâcher de l'objet, les moyens de valve sont susceptibles d'inverser les connexions des deux chambres de pression du vérin et de relier ainsi la chambre de pression du vérin à l'échappement ou respectivement à la source de fluide pour provoquer le retour du support accompagné du bras et du mécanisme de préhension vers la position de départ constante.

Selon les conditions locales de saisie de l'objet, l'organe détecteur est positionné et/ou préréglé pour déclencher l'isolement de la chambre de pression avant ou après que le mécanisme de préhension n'entre en contact avec l'objet et provoquer ainsi de préférence l'arrêt du mécanisme de préhension à proximité du dernier objet du haut de la pile sans entrer en contact avec celui-ci.

De même, l'organe détecteur peut être positionné et/ou préréglé pour provoquer l'appui élastique du mécanisme de préhension sur l'objet sous l'action de la pression différentielle agissant sur le piston.

Selon un mode de réalisation courant de l'invention, les deux chambres de pression du vérin de part et d'autre de son piston sont contrôlées simultanément par les moyens de valve, l'une de ces chambres étant reliée à la source de fluide sous pression tandis que l'autre est reliée à l'échappement pendant le mouvement d'approche de l'objet et vice versa pendant le mouvement de retour du support du bras vers sa position de départ, de manière à utiliser les deux chambres du vérin pour contrôler l'arrêt élastique du mécanisme de préhension.

Le lâcher de l'objet par le mécanisme de préhension sur la pile de retour des objets peut être déclenché par l'organe détecteur avant l'arrêt du mécanisme de préhension à proximité du dernier objet pour provoquer, par un effet de choc, le décrochage de l'objet maintenu par le mécanisme de préhension.

L'organe détecteur peut comporter un ou plusieurs contacts électriques actionnés, soit par un poussoir de longueur réglable et dont l'extrémité est susceptible de venir en appui sur la surface de l'objet situé en haut de la pile, soit par une cellule photoélectrique sensible à la présence de l'objet situé en haut de la pile.

Selon un mode de réalisation très important de l'invention, les moyens de valve contrôlant au moins une chambre de pression du vérin comportent des moyens d'amortissement par étranglement de l'écoulement du fluide de ou vers cette chambre, ces moyens d'amortissement étant déclenchés par l'organe détecteur à l'approche du haut de la pile d'objets et susceptibles de provoquer une réduction continue ou discontinue du débit de cet écoulement jusqu'à son interruption après l'isolement final de la chambre de pression avant l'arrêt du mécanisme de préhension devant le dernier objet en haut de la pile. Les moyens d'amortissement peuvent consister en au moins deux valves de section de passage décroissant et qui sont fermées dans des séquences successives en commençant sur celle de plus forte section après que le détecteur préréglé a repéré le haut de la pile d'objets.

Pendant l'approche du mécanisme de préhension vers l'objet situé en haut de la pile, une valve de petite section peut contrôler l'alimentation de la chambre du vérin et respectivement une valve de grande section de passage en parallèle sur une valve de petite section, l'échappement de l'autre chambre, le repérage du haut de la pile d'objets par l'organe détecteur provoquant successivement d'abord la fermeture de la valve d'échappement de grande section puis de la valve d'alimentation de petite section et enfin, avant l'arrêt du mécanisme de préhension, la fermeture de la valve d'échappement de petite section.

Selon un autre mode de réalisation, les moyens d'amortissement de l'écoulement du fluide sont constitués par des moyens oscillants de pilotage électrique provoquant un actionnement haché de durée décroissante d'au moins une partie des moyens de valve jusqu'à l'isolement final de la chambre de pression.

Le plateau support des objets comporte de préférence un plateau de commande susceptible de se déplacer en rotation et apte à recevoir une palette de manutention portant les objets et indexée avec précision sur le plateau de commande par des moyens de butée et de blocage. Le plateau de commande lui-même comporte une roue dentée calée sur l'axe du plateau et entraînée en rotation par une crémaillère débrayable actionnée par un vérin à fluide dont la course totale provoque une rotation du plateau correspondant à au moins une fraction exacte de la rotation de transfert d'une pile d'objets à la pile voisine.

Les moyens d'amortissement par étranglement de l'écoulement du fluide peuvent provoquer un étranglement plus énergique et/ou plus rapide de cet écoulement lorsque le mécanisme de préhension rapporte un objet que lorsqu'il vient saisir un objet, de manière à provoquer l'arrêt de ce mécanisme à proximité de l'objet en haut de la pile lorsque le mécanisme doit lâcher l'objet et non pas le saisir. Cet étranglement plus énergique peut être obtenu en réduisant les délais de fermeture des passages d'étranglement de l'écoulement du fluide.

D'autres buts et avantages de la présente invention apparaîtront à la lecture de la description suivante et des figures jointes, données à titre illustratif mais non limitatif.

La Figure 1 est une vue en élévation et schématique du dispositif de transfert automatique adapté pour alimenter un tour en pièces à usiner à partir d'une palette de manutention.

La Figure 2 est une vue en plan de la partie mécanique de ce dispositif de transfert et du tour.

La Figure 3 est une vue schématique, en coupe selon la ligne II-II de la Figure 4, du plateau-support de la palette, et

la Figure 4 représente en coupe selon l'axe I-I de la Figure 3, les mécanismes d'indexation et d'entraînement en rotation du plateau-support de la palette.

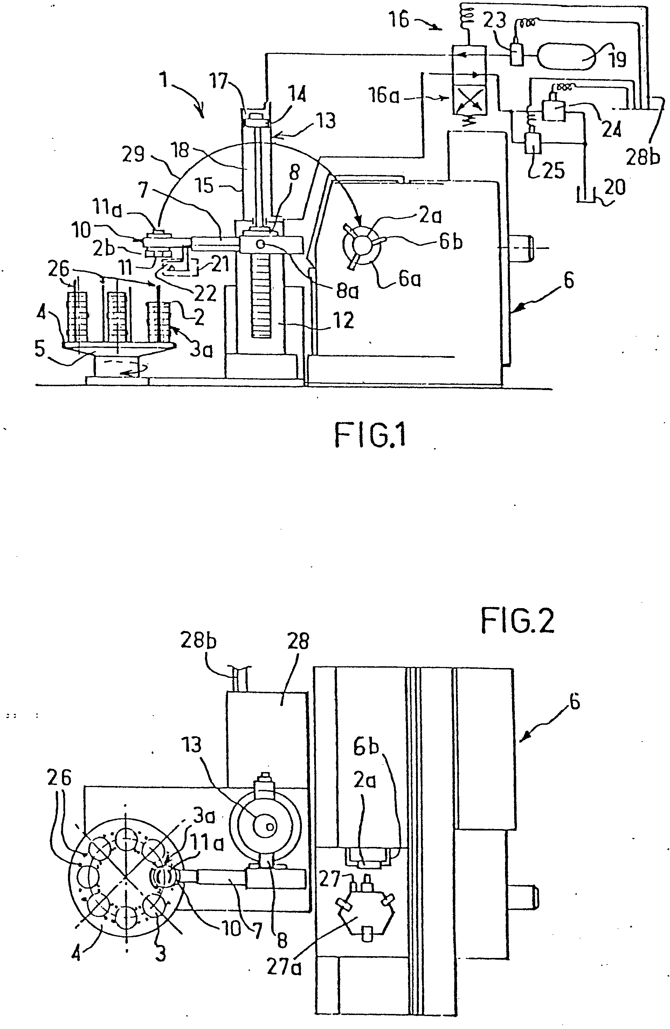

Le dispositif de transfert automatique 1 représenté sur les Figures 1 et 2 est disposé entre, d'une part, un stock de pièces à usiner 2 rangées en piles verticales 3 sur une palette 4 reposant sur un plateau-support 5 rotatif et, d'autre part, une machine-outil telle qu'un tour 6. Ce dispositif de transfert 1 comprend un bras de transfert 7 porté par un support 8 mobile et guidé verticalement dans un bâti 9 et muni à son extrémité d'au moins un mécanisme de préhension tel qu'un poignet 10 doté de pinces 11 et 11a. Le support mobile 8 du bras 7 se déplace à partir d'une position haute de départ constante dans un plan sensiblement vertical grâce à des moyens de guidage tels qu'une colonne verticale fixe 12 et sous l'action d'au moins un vérin 13 à fluide sous pression tel que l'air comprimé, dont le piston 14 ou respectivement le cylindre 15 est relié au support mobile 8 du bras 7.

Des moyens de valve 16 relient chacune des deux branches de pression 17 et 18 de part et d'autre du piston 14 du vérin 13 alternativement à une source de fluide comprimé 19 ou respectivement à l'échappement 20 par l'intermédiaire d'une valve d'inversion 16a. Un organe détecteur préréglé 21 porté par le bras de transfert 7 au voisinage et en dessous du mécanisme de préhension 10-11 contrôle le mécanisme de valve 16 et déclenche la mise en action de moyens d'amortissement du bras de transfert 7. Cet organe détecteur 21 qui remplit la fonction d'un interrupteur 22 déclenché par l'approche ou le contact de la pièce située en haut de la pile, peut comporter un poussoir de longueur réglable dont l'extrémité est susceptible de venir en appui sur la surface de l'objet 2 placé en haut de la pile 3 intéressée, ou bien de préférence, une cellule photoélectrique réglable et apte à remplir la fonction d'interrupteur avec un circuit électrique de contrôle.

Les moyens de valve 16 contrôlant les chambres de pression 17 et 18 comportent des moyens d'amortissement de l'écoulement d'air comprimé (de ou vers ces chambres) constitués par des passages étranglés. Une électrovalve de petite section 23 est interposée entre une source d'air comprimé 19 et la valve d'inversion 16a. La mise à l'échappement de la chambre 18 du vérin est contrôlée via la valve d'inversion 16a par une électrovalve de grande section de passage 24, montée en parallèle sur une électrovalve de petite section 25.

Par le terme « électrovalve », on peut comprendre également le cas des valves de section importante et commandées par une pression de fluide contrôlée par des électrovalves.

Le bras de transfert 7 est articulé autour du support 8 de manière à exécuter dans un plan vertical un mouvement de rotation de 180° autour d'un axe 8a entre une position horizontale au-dessus du plateau-support 5 et une position horizontale opposée du côté du tour 6. Il peut être prévu une position d'attente du bras 7 entre ces deux positions extrêmes, par exemple une position verticale.

La longueur du bras 7 est ajustable et son extrémité porte deux pinces opposées 11 et 11a, aptes à la saisie des pièces brutes 2 et des pièces usinées 2a. La partie ajustable du bras peut tourner sur elle-même d'au moins 90° à l'intérieur du bras 7 et fait office de poignet 10 dans le mécanisme de préhension.

Le bras 7 peut également subir un mouvement limité de translation sur son axe horizontal 8a. Ce mouvement est nécessaire à l'engagement ou au dégagement des pièces des mors de machines-outils telles que les broches des tours.

Le plateau support 5 est posé sur le sol à gauche du dispositif de transfert automatique 1 et reçoit à sa partie supérieure la palette d'approvisionnement 4 sur laquelle on a empilé entre n ensembles de tiges de guidage 26 (n − 1) colonnes ou piles verticales 3 de pièces brutes. Le plateau 5 est entraîné en rotation dans un mouvement de va-et-vient de façon à présenter successivement devant le poignet 10 une colonne 3 à vider de sa pièce brute 2 supérieure à l'aide de la pince 11, puis une colonne 3a vide ou partiellement vide à remplir de la dernière pièce usinée 2a à l'aide de la pince 11a qui reprend cette pièce usinée 2a sur les mors 6b de la broche 6a du tour 6.

Tous les mouvements de préhension précités peuvent être opérés à l'aide de vérins pneumatiques traditionnels combinés à des mécanismes simples tels que le montage jumelé de deux vérins dos à dos associés à une rainure hélicoïdale ou bien à un pignon actionné par une crémaillère simple ou débrayable.

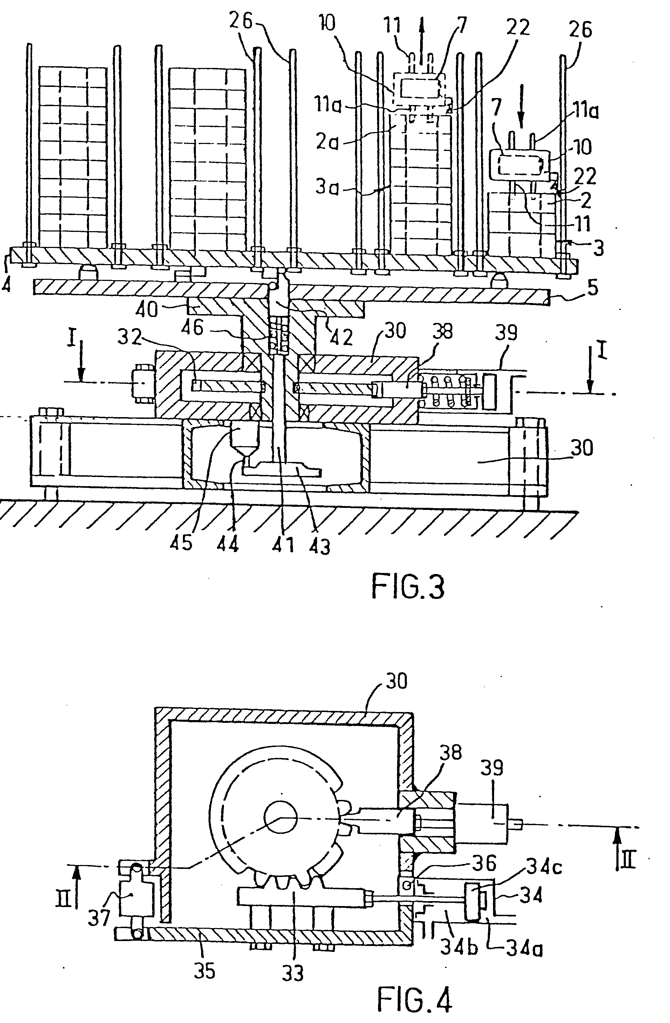

Si l'on se réfère maintenant aux Figures 3 et 4, on voit que le plateau support 5 est monté sur un châssis 30 reposant sur le sol et est entraîné en rotation par une roue dentée 32 en prise avec une crémaillère 33 solidaire de la tige d'un vérin 34. L'ensemble crémaillère 33 et vérin 34 est porté par un bâti 35 articulé autour d'un axe 36 à l'opposé duquel le bâti 35 est rattaché au châssis 30 par l'intermédiaire d'un vérin oscillant 37 susceptible de débrayer la crémaillère 33 du pignon 32. Un doigt d'indexation 38 est susceptible de venir se loger entre deux dents de la roue dentée 32 sous la poussée d'un vérin d'indexation à fluide 39 agissant par exemple à l'encontre de la force de réaction d'un ressort de rappel.

Le verrouillage de la palette 4 par rapport au plateau support 5 s'effectue à l'aide de verrous non représentés et peut être confirmé dans l'axe du moyeu 40 qui porte le plateau 5 et de la roue dentée 32 par un arbre 41 porteur à son sommet d'un doigt de verrouillage 42. L'arbre 41 est solidaire à sa partie inférieure d'un plateau 43 en regard duquel se trouve un doigt de poussée 44 actionné par un vérin à fluide 45. Le doigt de verrouillage 42 est normalement en position saillante sous l'effet du ressort de rappel 46 et il peut être rappelé en position d'effacement par l'action du vérin 45 repoussant par le doigt 44 le plateau 43 vers le bas de la Figure 3.

Le dispositif qui vient d'être décrit fonctionne de la façon suivante.

Les Figures 1 et 2 représentent le bras 7 en position horizontale haute d'attente pendant l'achèvement de l'usinage de la pièce 2a. Le poignet 10 du bras 7 a déjà saisi sur le haut de la pile 3 de pièces brutes la pièce 2b au moyen de sa pince 11 pour pièces brutes alors dirigée vers le bas. La pince 11a pour pièces usinées est dirigée vers le haut de la Figure et ne porte alors pas de pièce. Lorsque l'usinage de la pièce 2a est terminé, un contact de fin d'usinage 27 relié au bloc de commande logique 28 de contrôle de l'ensemble du tour 6 et du dispositif de transfert 1 déclenche le processus de transfert. Le porte-outils 27a recule et le poignet 10 tourne alors de 90° pour amener la pince 11a pour pièces usinées du côté du mandrin 6a du tour 6. Le bras 7 exécute ensuite une rotation de 180° autour de son axe 8a selon la flèche 29 puis un mouvement de translation vers l'avant le rapprochant de la colonne 12 et venant plaquer la pince 11a au contact de la pièce usinée 2a. Un contact de fin de course déclenche alors via le bloc logique 28 l'alimentation en air comprimé du vérin de serrage de la pince 11a pour pièces usinées qui serre la pièce usinée 2a. Le bloc logique 28 provoque ensuite le desserrage des mors 6b du tour 6 qui libèrent la pièce usinée 2a. Le processus de transfert se poursuit par un mouvement de translation arrière du bras 7 l'éloignant de la colonne 12 pour que la pince 11a serrée sur la pièce usinée 2a exerce un mouvement de traction arrachant la pièce usinée 2a des mors 6b du tour 6 jusqu'à une position de recul et de butée devant le mandrin 6a du tour 6. Le poignet 10 tourne ensuite de 180° pour amener la pièce brute 2b en face du mandrin 6a du tour et le bras 7 exécute un mouvement de translation vers l'avant introduisant la pièce 2b à l'intérieur des mors 6b qui se serrent sur la pièce brute 2b. Le bloc 28 déclenche ensuite le desserrage de la pince 11 pour pièces brutes et un mouvement en translation vers l'arrière du bras 7 pour que la pince 11 se dégage de la pièce 2b serrée par les mors 6b du tour 6. Le bras 7 tourne alors de 180° selon la flèche 29 pour revenir dans la position représentée sur la Figure 1, mais avec inversion des pinces 11 et 11a et avant la rotation du poignet 10 de 90°.

Dès que le bras 7 et le poignet 10 ont dégagé la zone du mandrin 6a et du porte-outils 27a, les séquences du processus d'usinage de la pièce 2b se déclenchent, contrôlées par des contacts de fin de course reliés au bloc logique 28.

Le poignet 10 qui se trouve au-dessus de la colonne de pièces usinées 3a effectue une rotation de 90° pour amener la pièce usinée 2a à sa partie inférieure prête à la dépose et le bloc logique 28 déclenche le processus de dépose de la pièce usinée 2a via le faisceau 28b des fils de commande des moyens de valve 16. L'excitation de la valve d'inversion 16a provoque son inversion et la liaison de la chambre 18 du vérin 13 à l'échappement via les électrovalves 24 et 25 excitées et la liaison de la chambre 17 à la source d'air comprimé 19 via le passage étranglé de l'électrovalve 23 excitée. Sous l'action de la pression différentielle (pression croissante dans la chambre 17 et décroissante dans la chambre 18) agissant sur le piston 14 et de la masse du bras 7 et de l'équipage mobile qui lui est attaché, le bras 7 et la pièce 2a descendent rapidement, mais à vitesse contrôlée par les étranglements, vers la pièce supérieure de la pile 3a de pièces usinées. Avant que la pièce 2a ne vienne toucher cette pièce supérieure, l'organe détecteur 21 repère la présence de la pièce supérieure et ferme l'interrupteur 22 qui déclenche successivement, via le bloc logique 28 et des temporisations, l'obturation de l'échappement à grand débit via l'électrovalve 24, puis l'obturation de l'électrovalve d'alimentation 23 et enfin l'obturation de l'électrovalve d'échappement 25 à petit débit.

Au cours de la descente du piston 14, une pression différentielle sensiblement constante s'établit entre les chambres 17 et 18 car la vitesse de descente du piston 14 provoque un équilibrage sensiblement constant des pressions sous l'effet des étranglements pour laisser subsister un effort de propulsion vers le bas juste égal à celui nécessaire pour vaincre les réactions de frottement. Dès que les électrovalves 23 et 24 sont fermées, la contrepression dans la chambre 18 augmente rapidement et freine énergiquement la descente du piston 14 et du bras 7 et la fermeture de l'électrovalve 25 étranglée arrête pratiquement sans rebond l'ensemble de l'équipage du bras 7 dans une position où la pièce usinée 2a est à proximité immédiate ou bien touche très légèrement la pièce supérieure de la pile 3a de pièces usinées. Après un court délai de temporisation contrôlé par le bloc 28, les pinces 11a s'ouvrent et laissent tomber la pièce usinée 2a sur la pile de pièces tandis qu'après un nouveau délai de temporisation, le bloc 28 commande électriquement la commutation de la valve d'inversion 16a et l'ouverture des valves d'étranglement 23, 24 et 25. La chambre 18 étant reliée au réservoir d'air comprimé 19 et la chambre 17 à l'échappement, le piston 14 et le bras 7 remontent vers la position supérieure constante de départ représentée sur la figure 1. Avant de continuer la description du processus de transfert, on doit remarquer que, pour la dépose de la pièce usinée 2a, le bloc 28 peut déclencher la fermeture des électrovalves 23, 24 et 25, après la fermeture de l'interrupteur 22, plus rapidement que pour la saisie d'une pièce à usiner, de telle manière que la pièce usinée 2a s'immobilise à faible distance de la pièce du haut de la pile de pièces usinées 3a mais sans toucher cette pièce. Dans une telle situation, si le bloc 28 déclenche l'ouverture des pinces 11a pour pièces usinées à l'instant de la fermeture de l'interrupteur 22, l'arrêt de la descente du bras 7 se produit avec un léger choc ou même avec un léger rappel vers le haut après la fermeture de la valve d'étranglement 25, ce qui facilite le décrochage de la pièce usinée 2a qui ne doit pas rester attachée aux pinces 11a.

Lorsque le contact de retour a détecté la remontée du bras 7, le bloc logique de commande déclenche le changement de pile devant le bras 7, par rotation du plateau support 5. Pour cela, la crémaillère 33 qui était repoussée à distance de la couronne dentée 32 par le vérin 37, est rappelée par ce vérin 37 au contact de la denture de la couronne 32, puis le doigt de verrouillage et d'indexation 38 est dégagé par le vérin 39 de l'entredent de la couronne 32 où il était logé. Le bloc logique 28 déclenche ensuite l'alimentation en fluide sous pression de la chambre 34a du vérin 34 pour réaliser la course de la crémaillère 33 qui, par l'intermédiaire du moyeu 40, fait tourner le plateau 5 et la palette 4 qui lui est reliée en rotation d'une fraction de tour correspondant exactement au transfert de la pile de pièces brutes 3 à la place de la pile de pièces usinées 3a.

Dans l'hypothèse où les pièces à usiner 2 seraient de dimension si importante que la course de la crémaillère 33 ne puisse faire effectuer la totalité de la rotation nécessaire pour le plateau 5, il suffit de faire débrayer la crémaillère 33 du contact avec la couronne dentée 32 en alimentant le vérin 37, puis de rappeler la crémaillère 33 dans la position représentée sur la Figure 4 en alimentant la chambre 34b du vérin 34 en air comprimé, puis de reprendre la séquence d'avance de la crémaillère, le même processus pouvant être répété autant de fois que nécessaire et la course du piston 34c du vérin 34 pouvant être ajustée pour les besoins de chaque pièce à usiner particulière.

Dès que le plateau 5 et la palette 4 ont effectué la rotation de transfert des piles de pièces 3a et 3, le vérin d'indexation 39 est remis sous pression et le doigt 38 peut se loger entre deux dents de la couronne 32 pour bien la positionner et l'immobiliser fermement pendant la suite du processus de transfert.

Dès que les contacts de fin de course ont repéré la fin du processus de transfert de la pile de pièces à usiner 3 à la place de la pile de pièces usinées 3a, l'information est transmise au bloc logique 28 qui déclenche le processus de préhension de la pièce à usiner, qui commence par la rotation du poignet 10 pour amener les pinces 11 pour pièces à usiner en position inférieure telle que représentée sur la Figure 1. Ensuite, le bloc 28 excite la valve d'inversion 16a qui commute dans la position représentée sur la Figure 1 et les électrovalves d'étranglement 23, 24, 25 qui s'ouvrent.

Le processus d'approche des pinces 11, de la pièce située à la partie supérieure de la pile de pièces à usiner 3, se déroule comme décrit précédemment pour la dépose de la pièce usinée 2a à la seule différence que la fermeture de l'interrupteur 22 peut déclencher une fermeture plus lente des .électrovalves 23, 24, 25, de telle manière que les pinces 11 appuient modérément sur la pièce 2 située à la partie supérieure de la pile 3 et redressent cette pièce 2 en bonne position dans l'hypothèse où cette pièce 2 serait posée en biais de la pièce contiguë située en dessous d'elle. On doit comprendre que l'effort d'appui modéré des pinces 11 sur la pièce 2 est d'origine pneumatique et donc élastique, mais résulte, en fait, de la différence d'efforts entre le poids du bras 7 et des organes qui lui sont reliés et l'effort de la pression différentielle sur le piston 14 repoussant celui-ci vers le haut de la Figure 1 avec un effort inférieur à ce poids.

Après l'arrêt des pinces 11 au contact de la pièce 2, le bloc 28 délivre au vérin de fermeture de la pince 11, un ordre de mise sous pression qui fait refermer les pinces 11 sur la pièce 2. Dès réception de l'impulsion de fin de fermeture des pinces le bloc 28 excite à nouveau les moyens de valve 16 faisant commuter la valve d'inversion 16a qui relie alors la chambre 18 au réservoir d'air comprimé 19 via la valve 23 ouverte et la chambre 17 à l'échappement via les valves 24 et 25 ouvertes. Le bras 7 remonte rapidement et le piston 14 s'immobilise en butée pour amener le bras 7 et les pinces 11 et 11a dans la position représentée sur la Figure 1, les pinces 11 pour pièces usinées étant alors serrées non plus sur la pièce à usiner 2b mais sur la pièce suivante 2.

Pour achever le processus de transfert, il reste à réaliser le retour de la pile de pièces à usiner 3 dans la position de repos représentée sur la Figure 2. Pour cela, le bloc 28 déclenche l'échappement du vérin 39 et le doigt 38 s'échappe de l'entredent de la couronne 32. La chambre 34b du vérin 34 est ensuite alimentée en air comprimé et la crémaillère 33 effectue un mouvement de retour qui rappelle la couronne 32, le plateau 5 et la palette 4 en position de départ telle que représentée sur la Figure 2. Le vérin 39 est ensuite remis sous pression pour verrouiller la couronne 32 en rotation par rapport au châssis 30. Le vérin 37 peut également être remis sous pression pour éloigner la crémaillère 33 de la couronne 32.

Le dispositif de transfert se met ensuite en position d'attente telle que représentée sur la Figure 1 pendant que se poursuit l'usinage de la pièce 2b (prise entre mors sur le mandrin 6a du tour) commencé dès le dégagement du bras 7 de la zone du porte-outils 27a.

Dès que l'usinage de la pièce 2b est terminé, le processus de transfert reprend de la façon qui vient d'être décrite jusqu'à l'épuisement de toutes les pièces de la pile 3 qui sont transférées automatiquement après usinage sur la pile 3a.

Un interrupteur non représenté, et qui peut être monté sur le bras 7, détecte alors l'épuisement de la pile de pièces à usiner 3 et le bloc logique 28 déclenche deux actionnements successifs de la crémaillère 33 pour présenter à la place de la pile 3a pleine de pièces usinées la pile 3 vide, et à la place de la pile 3 vide, une nouvelle pile pleine de pièces à usiner.

Quand la dernière pile de pièces à usiner est épuisée, un contact électrique ad hoc arrête le processus de transfert et la machine outil 6 et déclenche, le cas échéant, un signal visuel ou sonore de panne indiquant à l'opérateur chargé de la machine qu'il est nécessaire de substituer à la palette 4 pleine de pièces usinées, une nouvelle palette de pièces à usiner formant au maximum n-1 piles de pièces de manière à laisser libre la place d'une pile pour recevoir les premières pièces usinées.

Bien entendu, l'invention ne se limite pas au mode de réalisation décrit et représenté. Elle est susceptible de nombreuses modifications et de variantes accessibles à l'homme de l'art, sans que l'on ne s'écarte de l'esprit de l'invention.

Ainsi, il est possible de substituer au tour 6 n'importe quel autre type de machine-outil ou de poste d'opération agissant sur les pièces ou les objets pourvu que les organes de préhension du bras 7 et du poste d'opération soient adaptés à la pièce ou à l'objet.

Il est possible également d'utiliser un autre fluide que de l'air comprimé pour l'actionnement des divers vérins du dispositif de transfert, y compris le vérin principal 13. Dans l'hypothèse où l'on utiliserait un fluide hydraulique, pour donner de l'élasticité au positionnement d'arrêt du piston 14 en position intermédiaire et au poignet 10 en arrêt sur le haut de la pile de pièces, on peut introduire entre la valve d'inversion 16a et chacune des chambres 17 et 18, une colonne à grande élasticité telle qu'un gaz comprimé isolé de ces chambres 17 et 18 par une membrane élastique souple.

A la place des électrovalves d'étranglement 23, 24, 25 qui se sont révélées très efficaces avec un circuit d'air comprimé, on peut utiliser des moyens oscillants de pilotage électrique des électrovalves provoquant, après la fermeture de l'interrupteur 22, un actionnement haché de durée décroissante des électrovalves jusqu'à l'isolement final des chambres de pression. L'amortissement de l'arrêt du piston 14 peut ainsi être encore amélioré.

Pour contrôler le déplacement du piston 14, il est possible également d'alimenter en fluide sous pression la seule chambre 18, la chambre 17 étant en permanence reliée à l'échappement. Pour provoquer la descente du piston 14, la chambre 18 est reliée à l'échappement et le piston 14 descend sous l'action de la pesanteur sur le bras 7 et son équipage. L'arrêt amorti du piston 14 est obtenu par étranglement croissant de l'échappement et coupure de celui-ci, comme décrit précédemment, et pour assurer la remontée du piston 14, il suffit de relier la chambre 18 au réservoir d'air comprimé 19.

On peut constater sur la Figure 3 que les piles 3 de pièces 2 sont guidées par de longues tiges verticales 26 qui, sur la Figure 2, sont au nombre de 4 par pile et sont disposées symétriquement par groupe de deux par rapport à l'axe de la pièce de manière à ne pas interférer avec l'encombrement du poignet 10 et des pinces 11. Ces tiges sont réalisées de préférence sous forme d'un barreau circulaire plein fixé sur la plaque 4 de fond de la palette par des écrous et contre-écrous. On peut aussi avantageusement prévoir pour ces tiges des sections tubulaires partielles dont le bord extérieur convexe fait saillie du côté des pièces à « encager » entre quatre tiges de guidage.

Bien entendu, les différentes séquences de transfert n'ont été citées qu'à titre d'exemple non limitatif et peuvent être adaptées à chaque type de transfert à réaliser, notamment dans le cas où l'opération réalisée sur la pièce ou l'objet sur le poste d'opération dure beaucoup moins longtemps que le transfert de l'objet lui-même.

Les piles 3 de pièces à usiner 2 et de pièces usinées 2a peuvent être formées dans des magasins inclinés ou même horizontaux lorsque ces pièces restent en équilibre stable dans cette position. La pression élastique du poignet 10 du bras 7 permet encore d'assurer une bonne saisie des pièces dans cette position et les pièces usinées peuvent être disposées dans une autre position que les pièces en attente d'usinage. L'empilement des pièces usinées sur la palette 4 peut être utilisé directement pour réaliser une autre phase d'usinage sur ces pièces en prévoyant par exemple un retournement des pièces à leur dépose après la première phase d'usinage.

La chambre de fluide à grande élasticité indispensable pour obtenir l'arrêt « élastique » du piston du vérin peut être remplie d'un liquide, tel que de l'huile, pressurisé par un gaz et constituer notamment un système oléopneumatique où le pilotage de la pression s'effectue sur la phase pneumatique, l'huile servant de fluide de transmission de pression et d'élément de lubrification et d'amortissement du vérin.

**Revendications**

1. Dispositif de transfert automatique (1) d'objets ou de pièces (2) rangés en une pile notamment en une pile verticale (3) sur un plateau support (5) vers un poste d'opération tel qu'une machine-outil (6) ou respectivement de transfert inverse du poste d'opération (6b) vers le plateau support (5), du type comprenant un bras de transfert (7) porté par un support mobile (8) dans un bâti (9) et muni à son extrémité d'au moins un mécanisme de préhension (10) de l'objet (2) à partir d'une position de départ constante, au moins un organe détecteur préréglé (21) étant porté par le bras de transfert (7) ou le mécanisme de préhension (10) et susceptible de repérer l'approche du haut de la pile d'objets (3) par le mécanisme de préhension (10) et le support (8) du bras (7) se déplaçant, à partir d'une position de départ constante, dans un plan sensiblement vertical sous l'action, d'une part, de moyens de guidage tels qu'au moins une colonne verticale fixe (12) et, d'autre part, d'au moins un vérin (13) à fluide sous pression dont l'un des éléments (piston (14) ou respectivement cylindre (18)) est relié directement ou par l'intermédiaire d'organes de transmission au support (8) du bras (7), caractérisé en ce que le piston (14) du vérin (13) est soumis en position d'arrêt à l'action du fluide d'au moins une chambre de fluide (17 ou 18) à grande élasticité tel que de l'air comprimé et que pour contrôler, depuis la position de départ constante, le mouvement d'approche du mécanisme de préhension (10) vers l'objet (2) à saisir situé à des hauteurs variables sur sa pile (3), le dispositif comporte, d'une part, des moyens de valve (16) susceptibles de relier au moins l'une des deux chambres de pression (17 ou 18) du vérin (13) délimitées par le piston (14) à une source de fluide sous pression (19) tel que de l'air comprimé ou respectivement à l'échappement (20) pour provoquer le déplacement relatif du piston (14) du vérin (13) et l'approche du mécanisme de préhension (10) vers l'objet (2) et, d'autre part, l'organe détecteur préréglé (21) qui repère l'approche du haut de la pile (3) d'objets par le mécanisme de préhension (10) et agit sur les moyens de valve (16) pour déclencher l'isolement de ladite chambre (17 ou 18) de la source de fluide (19) ou respectivement de l'échappement (20) pour provoquer par là l'arrêt « élastique » du piston (14) du vérin (13) par rapport à son cylindre (15) sous l'action résultante de la pression différentielle de fluide agissant sur lui combinée aux autres forces agissant sur le mécanisme de préhension (10) telles que la pesanteur et les réactions de frottement et de contact et, par voie de conséquence, l'arrêt sous l'action résultante d'au moins un volume de fluide élastique tel que de l'air comprimé, du mécanisme de préhension (10) dans une position de manipulation où il reçoit l'ordre de saisir ou respectivement lâcher l'objet (2) sur le haut de la pile (3) d'objets et en ce que pour dégager le bras de transfert (7) de la pile (3) d'objets, après saisie ou respectivement lâcher de l'objet (2), les moyens de valve (10) sont susceptibles d'inverser les connexions des deux chambres de pression (17 ou 18) du vérin (13) et de relier ainsi la chambre de pression (17 ou 18) du vérin (13) à l'échappement (20) ou respectivement à la source de fluide (19) pour provoquer le retour du support (8) accompagné du bras (7) et du mécanisme de préhension (10) vers la position de départ constante.

2. Dispositif selon la revendication 1, caractérisé en ce que l'organe détecteur (21) est positionné et/ou préréglé pour déclencher l'isolement de la chambre de pression (17 ou 18) avant que le mécanisme de préhension (10) n'entre en contact avec l'objet (2).

3. Dispositif selon la revendication 1, caractérisé en ce que l'organe détecteur (21) est positionné et/ou préréglé pour déclencher l'isolement de la chambre de pression (17 ou 18) après que le mécanisme de préhension (10) soit entré en contact avec l'objet (2).

4. Dispositif selon l'une quelconque des revendications 1 à 3, caractérisé en ce que l'organe détecteur (21) est positionné et/ou préréglé pour provoquer l'appui élastique du mécanisme de préhension (10) sur l'objet sous l'action de la pression différentielle agissant sur le piston (14).

5. Dispositif selon l'une quelconque des revendications 1 à 4, caractérisé en ce que les deux chambres de pression (17 ou 18) du vérin (13) de part et d'autre de son piston (14) sont contrôlées simultanément par les moyens de valve (10), l'une de ces chambres étant reliées à la source de fluide sous pression (19) tandis que l'autre est reliée à l'échappement (20) pendant le mouvement d'approche de l'objet (2) et vice versa pendant le mouvement de retour du support (8) du bras (7) vers sa position de départ, de manière à utiliser les deux chambres (17 ou 18) du vérin (13) pour contrôler l'arrêt élastique du mécanisme de préhension (10).

6. Dispositif selon la revendication 1 ou 2, caractérisé en ce que l'organe détecteur (21) est positionné et/ou préréglé pour provoquer l'arrêt du mécanisme de préhension (10) à proximité du dernier objet (2) en haut de la pile (3), mais sans entrer en contact avec celui-ci.

7. Dispositif selon la revendication 6, caractérisé en ce que le lâcher de l'objet (2) par le mécanisme de préhension (10) sur la pile de retour (3a) des objets est déclenché par l'organe détecteur (21) avant l'arrêt du mécanisme de préhension (10) à proximité du dernier objet (2) pour provoquer, par un effet de choc, le décrochage de l'objet (2a) maintenu par le mécanisme de préhension (10).

8. Dispositif selon l'une quelconque des revendications 1 à 7, caractérisé en ce que l'organe détecteur (21) comporte au moins un contact électrique (22) des moyens de valve (16), actionné par un poussoir de longueur réglable et dont l'extrémité est susceptible de venir en appui sur la surface de l'objet (2) situé en haut de la pile (3).

9. Dispositif selon l'une quelconque des revendications 1 à 8, caractérisé en ce que l'organe détecteur (21) comporte une cellule photoélectrique sensible à la présence de l'objet (2) situé en haut de la pile (3) pour déclencher un contact électrique (22) de commande des moyens de valve (16).

10. Dispositif selon l'une quelconque des revendications 1 à 9, caractérisé en ce que les moyens de valve (16) contrôlant au moins une chambre de pression (17 ou 18) du vérin (13) comportent des moyens d'amortissement par étranglement de l'écoulement du fluide de ou vers cette chambre (17 ou 18), ces moyens d'amortissement étant déclenchés par l'organe détecteur (21) à l'approche du haut de la pile (3) d'objets et susceptibles de provoquer une réduction continue ou discontinue du débit de cet écoulement jusqu'à son interruption après l'isolement final de la chambre de pression (17 ou 18) avant l'arrêt du mécanisme de préhension (10) devant le dernier objet (2) en haut de la pile (3).

11. Dispositif selon la revendication 10, caractérisé en ce que les moyens d'amortissement consistent en au moins deux valves de section de passage décroissant et qui sont fermées dans des séquences successives en commençant par celle de plus forte section après que le détecteur préréglé a repéré le haut de la pile (3) d'objets (2).

12. Dispositif selon la revendication 11, caractérisé en ce que pendant l'approche du mécanisme de préhension (10) vers l'objet (2) situé en haut de la pile (3), une valve de petite section (23) contrôle l'alimentation de la chambre (17 ou 18) du vérin (13) et respectivement une valve de grande section de passage (24) montée en parallèle sur une valve de petite section (25), contrôle l'échappement de l'autre chambre (18 ou 17), le repérage du haut de la pile (3) d'objets (2) par l'organe détecteur (21) provoquant successivement d'abord la fermeture de la valve d'échappement de grande section (24) puis de la valve d'alimentation de petite section (23), et enfin, avant l'arrêt du mécanisme de préhension (10), la fermeture de la valve d'échappement de petite section (25).

13. Dispositif selon la revendication 10, caractérisé en ce que les moyens d'amortissement de l'écoulement du fluide sont constitués par des moyens oscillants de pilotage électrique provoquant un actionnement haché de durée décroissante d'au moins une partie des moyens de valve (16) jusqu'à l'isolement final de la chambre de pression (17 ou 18).

14. Dispositif selon l'une quelconque des revendications 1 à 13, comportant des moyens d'amortissement par étranglement de l'écoulement du fluide caractérisé en ce que ces moyens provoquent un étranglement plus énergique et/ou plus rapide de cet écoulement lorsque le mécanisme de préhension (10) rapporte un objet (2a) que lorsque le mécanisme de préhension (10) vient saisir un objet (2), de manière à provoquer l'arrêt du mécanisme de préhension (10) à proximité du dernier objet (2) en haut de la pile (3) ou tout au moins avec une moindre pression sur ce dernier objet (2) de la pile (3) lorsque le mécanisme de préhension (10) doit lâcher l'objet (2a) qu'il rapporte et non pas saisir le dernier objet (2) sur le haut de la pile (3).

15. Dispositif selon la revendication 14, caractérisé en ce que l'étranglement plus énergique est obtenu par réduction des délais de fermeture des passages d'étranglement de l'écoulement du fluide.

16. Dispositif selon l'une quelconque des revendications 1 à 15, caractérisé en ce que le plateau support des objets (2) comporte un plateau de commande (5) susceptible de se déplacer en rotation intermittente alternative et apte à recevoir une palette de manutention (4) portant les objets (2) et indexée avec précision sur le plateau de commande (5) par des moyens de butée et de blocage (42).

17. Dispositif selon la revendication 16, dans lequel le plateau de commande (5) comporte une roue dentée (32) calée sur l'axe du plateau, caractérisé en ce que cette roue (32) est entraînée en rotation par une crémaillère débrayable (33) actionnée par un vérin à fluide (34) dont la course totale provoque une rotation du plateau (5) qui correspond à au moins une fraction exacte de la rotation de transfert d'une pile (3) d'objets (2) à la pile voisine (3a).

**Claims**

1. Device (1) for the automatic transfer of objects or parts (2) arranged in a pile, especially a vertical pile (3) on a support plate (5) towards an operation position such as a machine-tool (6) or respectively reverse transfer of the operation position (6b) towards the support plate (5), of the type comprising a transfer arm (7) borne by a mobile support (8) in a housing (9) and provided at its end with at least one prehension mechanism (10) of the object (2) from a constant starting position, at least one preadjusted detector member (21) being borne by the transfer arm (7) or the prehension mechanism (10) and adapted to detect the approach of the top of the pile of objects (3) by the prehension mechanism (10) and the support (8) of the arm (7) being displaced, from a constant starting position in a substantially vertical plane under the action, on the one hand, of guiding means such as at least one fixed vertical column (12) and, on the other hand, of at least one pressure fluid jack (13) of which one of the elements (piston (14) or respectively cylinder (18)) is connected directly or through the intermediary of transmission members to the support (8) of the arm (7), characterized in that the piston (14) of the jack (13) is subjected in stop position to the action of the fluid of at least one fluid chamber (17 or 18) the fluid having a great elasticity such as compressed air and that for controlling, from the constant starting position, the approach movement of the prehension mechanism (10) towards the object (2) to be seized positioned at variable heights in its pile (3), the device comprises, on the one hand, valve means (16) adapted to connect at least one of the two pressure chambers (17 or 18) of the jack (13) delimited by the piston (14) to a pressure fluid (19) such as compressed air or respectively to the exhaust (20) in order to provoke the relative displacement of the piston (14) of the jack (13) and the approach of the prehension mechanism (10) towards the object (2) and, on the other hand, the preadjusted detector member (21) that indicates the approach from the top of the pile (3) of objects by the prehension mechanism (10) and acts on the valve means (16) to initiate the isolation of the said chamber (17 or 18) from the fluid supply (19) or respectively the exhaust (20) to provoke in the same way the « elastic » stop of the piston (14) of the jack (13) with respect to its cylinder (15) under the resulting action of the differential fluid pressure acting on it combined with other forces acting on the prehension mechanism (10) such that the gravity and the rubbing and contact reactions and, by way of consequence, the stop under the resulting action of at least one volume of elastic fluid such as compressed air, of the prehension mechanism (10) in a manipulation position where it receives the order to seize or respectively release the object (2) on the top of the pile (3) of objects and in that to disengage the transfer arm (7) of the pile (3) of objects, after seizing or respectively releasing the object (2), the valve means (10) are able to reverse the connections of the two pressure chambers (17 or 18) of the jack (13) and thus to connect the pressure chamber (17 or 18) of the jack to the exhaust (20) or respectively to the fluid supply (19) to provoke the return of the support (8) accompanied by the arm (7) and the prehension mechanism (10) towards the constant starting position.

2. Device according to claim 1, characterized in that the detector member (21) is positioned and/or preadjusted in order to initiate the isolation of the pressure chamber (17 or 18) before the prehension mechanism (10) enters into contact with the object (2).

3. Device according to claim 1, characterized in that the detector member (21) is positioned and/or preadjusted in order to initiate the isolation of the pressure chamber (17 or 18) after the prehension mechanism (10) enters into contact with the object (2).

4. Device according to any one of claims 1 to 3, characterized in that the detector member (21) is positioned and/or preadjusted to provoke the resilient bearing of the prehension mechanism (10) on the object under the action of the differential pressure acting on the piston (14).

5. Device according to any one of claims 1 to 4, characterized in that the two pressure chambers (17 or 18) of the jack (13) on either side of its piston (14) are simultaneously controlled by the valve means (10), one of these chambers being connected to the pressure fluid supply (19) whereas the other is connected to the exhaust (20) during the approach movement of the object (2) and vice versa during the return movement of the support (8) of the arm (7) towards its depart position, so as to use the two chambers (17 or 18) of the jack (13) to control the resilient stop of the prehension mechanism (10).

6. Device according to claim 1 or 2, characterized in that the detection member (21) is positioned and/or preadjusted to provoke the stop of the prehension mechanism (10), adjacent to the last object (2) on the top of the pile (3), but without entering into contact with it.

7. Device according to claim 6, characterized in that the release of the object (2) by the prehension mechanism (10) on the return pile (3a) of the objects is activated by the detector member (21) before the stop of the prehension mechanism (10) adjacent to the last object (2) to provoke by an impact effect, the falling out of the object (2a) maintained by the prehension mechanism (10).

8. Device according to any one of claims 1 to 7, characterized in that the detector member (21) comprises at least one electric contact (22) of the valve means (16), actuated by a length-adjustable push rod and the end of which is adapted to bear on the surface of the object (2) situated at the top of the pile (3).

9. Device according to any one of claims 1 to 8, characterized in that the detector member (21) comprises a photo-electric cell sensitive to the presence of the object (2) situated at the top of the pile (3) in order to release an electric contact (22) for controlling the valve means (16).

10. Device according to any one of claims 1 to 9, characterized in that the valve means (16) controlling at least one pressure chamber (17 or 18) of the jack (13) comprise damping means by throttling of the fluid flow from or towards this chamber (17 or 18), these damping means being initiated by the detector element (21) at the approach of the top of the pile (3) of objects and adapted to provoke a continuous or discontinuous reduction of the rate of this flow until its interruption after final isolation of the pressure chamber (17 or 18) before the stop of the prehension mechanism (10) in front of the last object (2) at the top of the pile (3).

11. Device according to claim 10, characterized in that the damping means consist of at least two valves having decreasing passage sections and which are closed in successive sequences starting by that of the largest section after the preadjusted detector has indicated the top of the pile (3) of objects (2).

12. Device according to claim 11, characterized in that during the approach of the prehension mechanism (10) towards the object (2) situated at the top of the pile (3), a valve of restricted section (23) controls the supply of the chamber (17 or 18) of the jack (13) and respectively a wide passage section valve (24) mounted in parallel on a valve of restricted section (25), controls the exhaust of the other chamber (18 or 17), the detection of the top of the pile (3) of objects (2) by the detector member (21) provoking successively, first of all, the closing down of the wide section exhaust valve (24) then of the restricted section supply valve (23), and finally, before the stop of the prehension mechanism (10), the closing down of the restricted section exhaust valve (25).

13. Device according to claim 10, characterized in that the damping means of the fluid flow are constituted by oscillating means of electric piloting provoking an interrupted actuation of decreasing duration of at least one part of the valve means (16) until the final isolation of the pressure chamber (17 or 18).

14. Device according to any one of claims 1 to 13, comprising damping means by throttling of the fluid flow, characterized in that these means provoke a more active and/or more rapid throttling of this flow when the prehension mechanism (10) brings back an object (2a) than when the prehension mechanism (10) is seizing an object (2) in such a way as to provoke the stop of the prehension mechanism (10) adjacent to the last object (2) at the top of the pile (3) or at least with a lower pressure on this latter object (2) of the pile (3) when the prehension mechanism (10) must release the object (2a) that it brings back and not seize the last object (2) on the top of the pile (3).

15. Device according to claim 14, characterized in that the more active throttling is obtained by reduction of the closing down delays of the throttling passages of the liquid flow.

16. Device according to any one of claims 1 to 15, characterized in that the support plate of the objects (2) comprises a control plate (5) adapted to be displaced in alternate intermittent rotation and adapted to receive a handling pallet (4) bearing objects (2) and indexed with precision on the control plate (5) by abutment and blocking means (42).

17. Device according to claim 16, in which the control plate (5) comprises a toothed wheel (32) keyed on the axis of the plate, characterized in that this wheel (32) is driven in rotation by a declutchable toothed rack (33) actuated by a fluid jack (34) the total stroke of which provokes a rotation of plate (5) corresponding to at least one exact fraction of the transfer rotation of one pile (3) objects (2) to the nearby pile (3a).

**Ansprüche**

1. Automatische Transfervorrichtung (1) zur Förderung von auf einer Tragplatte (5) gestapelten, insbesondere von in Form eines vertikalen Stapels (3) aufeinandergeschichteten Gegenständen oder Werkstücken (2), zu einer Bearbeitungsstation, wie Werkzeugmaschine (6), bzw. zur umgekehrten Förderung von der Bearbeitungsstation (6b) zur Tragplatte (5), mit einem in einem Gestell (9) durch einen beweglichen Support (8) getragenen und an seinem Ende mit wenigstens einem Greifmechanismus (10) zum Greifen des Gegenstandes (2) von einer konstanten Ausgangslage aus versehenen Transferarm (7), wobei wenigstens ein vorreguliertes Fühlerorgan (21) von dem Transferarm (7) oder dem Greifmechanismus (10) getragen wird und geeignet ist, die Annäherung an das obere Ende des Gegenstandstapels (3) seitens des Greifmechanismus (10) und des Supports des Armes (7) abzufühlen, während die letzteren sich von einer konstanten Ausgangsstellung aus in einer wesentlich senkrechten Ebene bewegen unter der Einwirkung, einerseits, von Führungsmitteln, wie wenigstens einer feststehenden vertikalen Säule (12), und andererseits, von wenigstens einem Druckmediumheber (13), bei dem eins seiner Elemente (Kolben (14) bzw. Zylinder (18)) direkt oder über Übertragungsorgane mit dem Support (8) des Armes (7) verbunden ist, dadurch gekennzeichnet, dass der Kolben (14) des Hebers (13) in der Haltestellung der Wirkung des elastischen Mediums, wie Druckluft, wenigstens einer Mediumskammer (17 bzw. 18) unterworfen ist, und dass zwecks Kontrolle der Annäherungsbewegung des Greifsmechanismus (10) von der konstanten Ausgangsstellung aus, zum zu greifenden, in veränderlicher Höhe seines Stapels (3) liegenden Gegenstand (2) hin die Vorrichtung einerseits Ventilmittel (16) aufweist, die geeignet sind, wenigstens eine der beiden durch den Kolben (14) begrenzten Druckkammern (17 bzw. 18) des Hebers (13) mit einer Druckmediumquelle (19), wie Druckluftquelle, oder mit dem Auslass (20) zu verbinden, um die relative Bewegung des Kolbens (14) des Hebers (13), sowie die Annäherung des Greifmechanismus (10) an den Gegenstand (2) zu bewirken, und andererseits das vorregulierte Fühlerorgan (21) aufweist, das die Annäherung des Greifmechanismus (10) an das obere Ende des Gegenstandstapels (3) feststellt und auf die Ventilmittel (16) einwirkt, um die Isolierung dieser Kammer (17 bzw. 18) in bezug auf die Mediumquelle (19) bzw. den Auslass (20) zu bewirken und somit das « elastische » Anhalten des Kolbens (14) des Hebers (13) in bezug auf seinen Zylinder (15) unter dem Einfluss des resultierenden, auf ihn einwirkenden Differentialmediumdruckes hervorzurufen, der mit den anderen Kräften kombiniert ist, welche auf den Greifmechanismus einwirken, wie Schwerkraft und Reibungs- und Kontaktwirkungen, und folglich durch die resultierende Einwirkung wenigstens eines elastischen Mediumvolumens, wie Druckluftvolumens, das Anhalten des Greifermechanismus (10) in einer Handhabungstelung bewirken, in welcher der letztere den Befehl zum Greifen bzw. Loslassen des obersten Gegenstandes (2) des Stapels (3) empfängt, und dass zwecks Entfernens des Transferarmes (7) von dem Gegenstandstapel (3) nach Greifen bzw. Loslassen des Gegenstandes (2) die Ventilmittel geeignet sind, die Verbindungen der beiden Druckkarmern (17 bzw. 18) des Hebers (13) umzuschalten und somit die Druckkammer (17 bzw. 18) des Hebers (13) mit dem Auslass (20) bzw. mit der Druckmediumquelle (19) zu verbinden, um die Rückkehr des Supports (8) zusammen mit dem Arm (7) und dem Greifmechanismus (10) in die konstante Ausgangsstellung zu bewirken.

2. Vorrichtung nach Anspruch 1, dadurch gekennzeichnet, dass das Fühlerorgan (21) derart positioniert und/oder vorreguliert ist, dass es die Isolierung der Druckkammer (17 bzw. 18) bewirkt, bevor der Greifmechanismus (10) mit dem Gegenstand (2) in Berührung kommt.

3. Vorrichtung nach Anspruch 1, dadurch gekennzeichnet, dass das Fühlerorgan (21) derart positioniert und/oder vorreguliert ist, dass es die Isolierung der Druckkammer (17 bzw. 18) bewirkt, nachdem der Greifmechanismus (10) mit dem Gegenstand (2) in Berührung kommt.

4. Vorrichtung nach einem der Ansprüche 1 bis 3, dadurch gekennzeichnet, dass das Fühlerorgan (21) derart positioniert und/oder vorreguliert ist, dass es das elastische Anlegen des Greifmechanismus (10) an den Gegenstand unter der Einwirkung des auf den Kolben (14) wirkenden Differentialdruckes bewirkt.

5. Vorrichtung nach einem der Ansprüche 1 bis 4, dadurch gekennzeichnet, dass die beiden beiderseits des Kolbens (14) gelegenen Druckkammern (17 bzw. 18) des Hebers (13) gleichzeitig durch Ventilbewegungen (10) reguliert werden, wobei eine dieser Kammern während der Annäherung des Supports (8) des Armes (7) an den Gegenstand (2) mit der Druckmediumquelle (19) und die andere Kammer mit dem Auslass (20) verbunden ist, und umgekehrt während der Rückbewegung des Supports (8) des Armes (7) zu seiner Ausgangsstellung, derart, dass die beiden Kammern (17 bzw. 18) des Hebers (13) das elastische Anhalten des Greifmechanismus (10) kontrollieren.

6. Vorrichtung nach Anspruch 1 oder 2, dadurch gekennzeichnet, dass das Fühlerorgan (21) derart positioniert und/oder vorreguliert ist, dass es den Stillstand des Greifermechanismus (10) in Nähe des Letzten, am oberen Ende des Stapels (3) befindlichen Gegenstands (2) bewirkt, ohne dass der Mechanismus mit diesem Gegenstand in Berührung kommt.

7. Vorrichtung nach Anspruch 6, dadurch gekennzeichnet, dass das Loslassen des Gegenstands (2) durch den Greifermechanismus (10) auf den Rückkehrstapel (3a) durch das Fühlerorgan (21) vor dem Anhalten des Greifermechanismus (10) in Nähe des letzten Gegenstands (2) bewirkt wird, um durch eine Stosswirkung den vom Greifermechanismus (10) gehaltenen Gegenstand (2a) zu lösen.

8. Vorrichtung nach einem der Ansprüche 1 bis 7, dadurch gekennzeichnet, dass das Fühlerorgan (21) wenigstens einen elektrischen Kontakt (22) der Ventilmittel (16) aufweist, der vermittels eines Stössels einstellbarer Länge betätigt wird, dessen Ende zur Auflage auf die Oberfläche des im Stapel (3) oben liegenden Gegenstandes (2) bringbar ist.

9. Vorrichtung nach einem der Ansprüche 1 bis 8, dadurch gekennzeichnet, dass das Fühlerorgan (21) eine auf die Gegenwart des im Stapel (3) oben liegenden Gegenstandes (2) ansprechende lichtelektrische Zelle aufweist, die dann einen elektrischen Kontakt (22) zur Betätigung der Ventilmittel auslöst.

10. Vorrichtung nach einem der Ansprüche 1 bis 9, dadurch gekennzeichnet, dass die wenigstens eine Druckkammer (17 bzw. 18) des Hebers (13) bedienenden Ventilmittel (16) Dämpfermittel aufweisen, die durch Drosselung des Mediumstroms aus dieser Kammer bzw. in diese Kammer wirken, wobei diese Dämpfmittel durch das Fühlerorgan (21) bei Annäherung an das obere Ende des Stapels (3) ausgelöst werden und geeignet sind, eine kontinuierliche oder diskontinuierliche Verminderung dieses Stroms zu bewirken, bis zu dessen völliger Unterbechung nach der endgültigen Isolierung der Druckkammer (17 bzw. 18) vor der Stillsetzung des Greifermechanismus (10) vor dem im Stapel (3) oben gelegenen letzten Gegenstand.

11. Vorrichtung nach Anspruch 10, dadurch gekennzeichnet, dass die Dämpfermittel wenigstens zwei Ventile mit abnehmendem Durchlassquerschnitt umfassen, die in aufeinanderfolgenden Arbeitsstufen geschlossen werden, beginnend mit dem Ventil grössten Durchlassquerschnitts, nachdem das vorregulierte Fühlerorgan das obere Ende des durch die Gegenstände (2) gebildeten Stapels (3) festgestellt hat.

12. Vorrichtung nach Anspruch 11, dadurch gekennzeichnet, dass während der Annäherung des Greifmechanismus (10) an den im Stapel (3) oben gelegenen Gegenstand (2), ein Ventil mit kleinem Durchlassquerschnitt (23) die Speisung der Kammer (17 bzw. 18) des Hebers (13) kontrolliert, beziehungsweise ein Ventil mit grossem Durchlassquerschnitt (24), das mit eine Ventil kleinen Durchlassquerschnitts (25) parallelgeschaltet ist, den Auslass der anderen Kammer (18 bzw. 17) kontrolliert, wobei die Ermittlung des oberen Endes des aus den Gegenständen (2) bestehenden Stapels (3) vermittels des Fühlerorganes (21) in Aufeinanderfolge zunächst die Schliessung des Auslassventils mit grossem Durchlassquerschnitt (24) und sodann die Schliessung des Speiseventils mit kleinem Durchlassquerschnitt (23) und schliesslich vor der Stillsetzung des Greifmechanismus (10) die Schliessung des Auslassventils mit kleinem Durchlassquerschnitt (25) auslöst.

13. Vorrichtung nach Anspruch 10, dadurch gekennzeichnet, dass die Dämpfermittel für den Mediumstrom durch elektrische oszillierende Steuermittel gebildet sind, die eine intermittierende, abnehmende Betätigung wenigstens eines Teils der Ventilmittel (16) bewirken, bis die Druckkammer (17 bzw. 18) endgültig isoliert ist.

14. Vorrichtung nach einem der Ansprüche 1 bis 13, mit Mitteln zur Dämpfung durch Drosselung des Mediumstromes, dadurch gekennzeichnet, dass diese Mittel eine kräftigere und/oder schnellere Dämpfung dieses Stromes bewirken, wenn der Greifmechanismus (10) einen Gegenstand (2a) heranbringt, als wenn der Greifmechanismus (10) einen Gegenstand (2) ergreift, sodass der Greifmechanismus in Nähe des oberen, letzten Gegenstand (2) des Stapels (3) aufgebracht wird, wenn der Greifmechanismus (10) den herangebrachten Gegenstand (2) des Stapels (3) ergreifen soll.

15. Vorrichtung nach Anspruch 14, dadurch gekennzeichnet, dass die kräftigere Drosselung durch eine Verminderung der Schliesszeiten der Drosselstrecken des Mediumstroms erzielt wird.

16. Vorrichtung nach einem der Ansprüche 1 bis 15, dadurch gekennzeichnet, dass die die Gegenstände (2) tragende Platte eine Betätigungsplatte (5) umfasst, die intermittierend in abwechselnden Richtungen drehbar und geeignet ist, eine Palette (4) für die Handhabung der Gegenstände (2) aufzunehmen, welch letztere durch Anschlag- und Verriegelungsmittel (42) genau auf der Betätigungsplatte (5) positioniert wird.

17. Vorrichtung nach Anspruch 16, bei der die Betätigungsplatte (5) ein auf der Plattenachse befestigtes Zahnrad (32) aufweist, dadurch gekennzeichnet, dass dieses Rad (32) durch eine auskuppelbare Zahnstange (33) gedreht wird, die durch einen Druckmediumheber (34) betätigt wird, dessen Gesamtarbeitshub eine Drehung der Platte (5) bewirkt, welche wenigstens einem genauen Bruchteil der Transferdrehung eines Stapels (3) von Gegenständen (2) zwecks Förderung zum benachbarten Stapel (3a) entspricht.

FIG.1

FIG.2

FIG.3

FIG.4

2